# EUROPÄISCHE PATENTSCHRIFT

(11) **EP 3 365 507 B1**
(45) Veröffentlichungstag und Bekanntmachung des Hinweises auf die Patenterteilung: **30.09.2020**
(21) Anmeldenummer: 16778819.9
(22) Anmeldetag: 10.10.2016
(51) Int. Cl.: B32B 33/00, E04B 1/80, F16L 59/065, F25D 23/00, B29C 44/12, B32B 5/20, B32B 27/40

(54) **SANDWICHAUFBAU ENTHALTEND EIN VIP UND VERFAHREN ZU DESSEN HERSTELLUNG**
SANDWICH STRUCTURE INCLUDING A VIP AND METHOD FOR PRODUCING THE SAME
STRUCTURE SANDWICH CONTENANT UN PANNEAU VIP ET PROCÉDÉ DE FABRICATION DE LADITE STRUCTURE

(30) Priorität: 19.10.2015 EP 15190365
(43) Veröffentlichungstag der Anmeldung: 29.08.2018
(73) Patentinhaber: BASF SE, 67056 Ludwigshafen am Rhein (DE)
(72) Erfinder: FRICKE, Marc, 49090 Osnabrück (DE); MOHMEYER, Nils, 68165 Mannheim (DE); KROGMANN, Jörg, 49393 Lohne (DE); ELBING, Mark, 28215 Bremen (DE); BOOS, Jürgen, 48531 Nordhorn (DE); KLASSEN, Johann, 32351 Stemwede-Oppendorf (DE)
(74) Vertreter: BASF IP Association
(86) Internationale Anmeldenummer: PCT/EP2016/074158
(87) Internationale Veröffentlichungsnummer: WO 2017/067805

(56) Entgegenhaltungen:
- WO-A1-2006/134581
- WO-A1-2012/038215
- WO-A1-2015/153568

## Beschreibung

Die vorliegende Erfindung betrifft ein Verfahren zur Herstellung von Verbundelementen umfassend eine erste und eine zweite Deckschicht, ein Vakuumisolationspaneel zwischen den beiden Deckschichten, Polyurethan-Hartschaum in Kontakt mit der ersten Deckschichten und der Unterseite des Vakuumisolationspaneels sowie Polyurethan-Hartschaum in Kontakt mit der zweiten Deckschicht und der Oberseite des Vakuumisolationspaneels, umfassend das Auftragen eines Reaktionsgemisches (R1) zur Herstellung eines Polyurethan-Hartschaums auf die erste Deckschicht, das Inkontaktbringen der unteren Seite eines Vakuumisolationspaneels mit dem nicht ausgehärteten Reaktionsgemisch (R1), das Auftragen eines Reaktionsgemisches (R2) zur Herstellung eines Polyurethan-Hartschaums auf die obere Seite des Vakuumisolationspaneels, das Inkontaktbringen der zweiten Deckschicht mit der Schicht des nicht ausgehärteten Reaktionsgemischs (R2), und schließlich Aushärten beider Polyurethan-Hartschaumsysteme (R1) und (R2) unter Erhalt des Verbundelements. Weiter betrifft die vorliegende Erfindung derart erhältliche Verbundelemente, sowie die Verwendung eines erfindungsgemäßen Verbundelements oder eines nach einem erfindungsgemäßen Verfahren erhältlichen Verbundelements als Bauteile für Kühlgeräte oder als Baumaterial.

Vakuumisolationseinheiten, auch als Vakuumisolationspaneele bezeichnet, werden in zunehmendem Masse zur Wärmedämmung eingesetzt. Sie finden unter anderem Anwendung für Kühlgerätegehäuse, Behälter für Kühlfahrzeuge, Kühlboxen, Kühlzellen oder Fernwärmerohre. Aufgrund ihrer geringeren Wärmeleitfähigkeit bieten sie Vorteile gegenüber üblichen Dämmstoffen. So liegt das Energieeinsparpotential gegenüber geschlossenzelligen Polyurethan-Hartschaumstoffen üblicherweise über 40 %. Solche Vakuumisolationseinheiten bestehen in der Regel aus einem wärmeisolierenden Kernmaterial, beispielsweise offenzelligem Polyurethan (PUR)-Hartschaum, offenzelligem extrudierten Polystyrolschaum, Kieselgelen, Glasfasern, Kunststoffschüttungen, gepresstem Mahlgut aus PUR-Hartschaum bzw. - Halbhartschaum, Perlite, welches in eine gasdichte Folie verpackt, evakuiert und luftdicht eingeschweißt wird. Das Vakuum sollte kleiner 100 mbar sein. Bei diesem Vakuum kann eine Wärmeleitfähigkeit der Paneele je nach Struktur und Porengröße des Kernmaterials von unter 10 mW/(m*K) erreicht werden.

Zur Wärmedämmung werden die Vakuumisolationspaneele üblicherweise in das zu isolierende Bauteil eingebracht und dort fixiert. Die oben beschriebenen Bauteile zur Wärmedämmung bestehen zumeist aus zwei kompakten Schichten, vorzugsweise Metallblechen oder Kunststoffen, wie Polystyrol.

Im Allgemeinen wird bei der Herstellung von Kühlschränken das flüssige PUR-Hartschaumreaktionsgemisch in einen Hohlraum injiziert, der im allgemeinen aus Metallaußenwänden, einer Rückwand aus Kunststoff oder eines aus Pappe basierenden Mehrschichtverbundmaterials sowie einem Kunststoffinnengehäuse (Inliner) aufgebaut ist. Werden VIPs in das Kühlschrankgehäuse oder in die Tür eingebracht, müssen diese vor Einbringen des Reaktionsgemischs fixiert werden, um eine unkontrollierte Bewegung der Elemente während der Schaumausbildung im Hohlraum zu verhindern. Eine gängige Methode zur Fixierung stellt die Verwendung von doppelseitigem Klebeband dar, wobei die VIPs entweder an die Innenseite der Außenbleche (JP 2005- 076966) oder auch an den Inliner geklebt werden (EP-A-0434225). Wenn das VIP an der Innenseite der Metallaußenwände fixiert worden ist, wird es während des Ausschäumens des Hohlraumes vom reagierenden PUR-Hartschaumreaktionsgemisch umflossen. Durch die entstehende Reaktionswärme des PUR-Hartschaumreaktionsgemischs kommt es zu einer starken Erwärmung des Schaumstoffes im Gerät. Bei der anschließenden Abkühlung kann es aufgrund unterschiedlicher Ausdehnungskoeffizienten von VIP und PUR-Hartschaumstoff zu einer ungewollten Verformung des Gehäuses kommen. Die resultierende unterschiedliche Verformung wird vor allem an den Seitenwänden wahrnehmbar. Dies ist insbesondere bei der Verwendung von Edelstahloberflächen und der Verwendung eines doppelseitigen Klebebands für die VIP Fixierung der Fall, da hier aufgrund der glänzenden Oberfläche Defekte besonders gut erkennbar sind und aus Kostengründen eine dünne Metalldicke angestrebt wird.

Negative Effekte auf die Ebenmäßigkeit der Oberfläche können dadurch ausgeschlossen werden, dass ein zusätzliches starkes Blech zur Versteifung verwendet wird. Diese Lösung ist kostspielig und aufwändig, da keine Hohlräume o.ä. beim Zusammenfügen der Bleche entstehen dürfen. Ferner ist von Nachteil, dass das Gewicht des Kühlgeräts deutlich erhöht wird.

In der DE-A 199 48 361 wird ein Verfahren zur Fixierung von VIPs an der Innenverkleidung des Gehäuses und der Tür eines Kühlgerätes durch eine Zwischenlage aus einem Wärmedämmmaterial beschrieben. Die Zwischenlage kann ein Formteil oder ein nicht näher spezifizierter Wärmedämmschaum sein, welcher auf die Innenverkleidung in flüssiger Form aufgetragen wird und in diesem Zustand das VIP darauf aufgesetzt wird. Es wird erwähnt, dass Wärmedämmschäume im Allgemeinen auf Basis von Polyurethan sind. In der EP-A 0 822 379 wird die Fixierung von VIPs an starren Platten durch ein im Kühlmöbelbau gebräuchliches PUR-Hartschaumreaktionsgemisch oder vorzugsweise durch einen PUR-Einkomponentenschaum, z.B. Assil® der Fa. Henkel, beschrieben. Die starre Platte ist z.B. eine Metallplatte oder Kunststoffplatte, vorzugsweise eine Metallkassette. Gemäß einer Ausführungsform kann das Schaumstoff-Reaktionsgemisch zunächst auf die Platte aufgebracht und das VIP in das noch flüssige Reaktionsgemisch eingelegt werden.

PUR-Einkomponentenschäume (z.B. Assil® der Fa. Henkel) haben typischerweise eine freie Rohdichte zwischen 20 - 30 g/l und stellen Isocyanat-Prepolymere dar, die physikalische Treibmittel unter Druck enthalten. Diese Systeme haben den Nachteil, dass sie durch Luftfeuchtigkeit aushärten und dazu mehrere Stunden benötigen. Eine derart lange Aushärtzeit ist aus wirtschaftlichen Überlegungen für eine Kühlschrankproduktion nicht interessant, da hier üblicherweise Taktzeiten von wenigen Minuten realisiert werden.

Übliche im Kühlmöbelbau gebräuchliche PUR-Schaum-Reaktionsgemische weisen im Allgemeinen freigeschäumte Dichten von 25 bis 45 g/l auf. In einem entsprechenden Beispiel (EP-A 0 822 379) wird ein Cyclopentan-haltiges PUR- Schaumreaktionsgemisch aus einem Polyetherpolyol (OH-Zahl 400) und einem polymeren Diphenylmethandiisocyanat eingesetzt. Gemäß dem Beispiel enthält die Formulierung keinen Schaumstabilisator. Von Nachteil ist, dass dadurch die Schaumstruktur nicht erhalten bleibt, sondern der Schaum auf eine Dichte von ca. 60 g/l (bestimmt laut DIN EN ISO 845) kollabiert. Aufgrund der extrem grobzelligen und offenporigen Schaumstruktur erhält man nach Verkleben der VIPs eine Schaum-Oberfläche, die durch große Unebenheiten, sogenannter Lunker, gekennzeichnet ist. Diese Lunker zeichnen sich durch die dünne Metallaußenwand deutlich nach außen ab und vermindern somit die Qualität der Oberfläche. Um eine gute flächige Verteilung des PUR-Schaumreaktionsgemischs auf einer Gerätewand bzw. unter dem VIP, zu gewährleisten, ist das Reaktionsgemisch in einer bestimmten Mindestflächendichte (g/m²) einzubringen. Bei den herkömmlichen Systemen mit Dichten von 25 bis 45 g/l können ausreichende Flächendichten erst erzielt werden, wenn hohe Verdichtungen (Verdichtung = Dichte des geschäumten Formteils/freie Rohdichte) gefahren werden. Die Verwendung hoher Verdichtungen bedeutet aber, dass geschlossene Formen verwendet werden müssen. In der Praxis müsste dann für jeden Kühlvorrichtungstyp eine andere angepasste geschlossene Form verwendet werden. Dies führt zu hohen Kosten in der Produktion. Zusätzlich sind hohe Verdichtungen, etwa größer 3, technisch schwer realisierbar, da Austrieb des gebildeten PUR- Schaumstoffes zum Problem wird.

In der WO 2005/026605 werden Formkörper aus hartem kompakten Polyurethan oder einem Polyurethan-Hartschaumstoff mit kompakter Außenhaut und zelligem Kern (= Polyurethan-Hartintegralschaumstoff) enthaltend mindestens ein Vakuumisolationspaneel beschrieben, welche zur Herstellung von Kühlvorrichtungen verwendet werden. Das VIP wird in eine Form eingebracht, in welche das VIP eingelegt wird, die dann mit dem Reaktionsgemisch für den PUR-Schaum befüllt wird. Die Form wird geschlossen und nach dem Aushärten des PUR-Schaumstoffs wird der Formkörper entnommen. Die Formteile sind selbsttragend, so dass eine Einhausung in Metall- oder Kunststoffgehäuse, wie bei üblichen Kühlbehältern, nicht erforderlich ist. Eine der Seiten des Formkörpers kann aber eine Schicht aus Metall oder Kunststoff sein, wobei diese Schicht mit in die Form eingelegt wird. Die freigeschäumte Dichte des Polyurethan-Hartintegralschaumstoffs beträgt 200 bis 800 kg/m³; die des harten kompakten Polyurethans liegt im Bereich von 700 bis 1200 kg/m³. Das harte kompakte Polyurethan enthält definitionsgemäß kein Treibmittel in der Rezeptur. Aufgrund der kompakten Außenhaut haben solche Systeme einen höheren Lambda-Wert als PUR-Hartschaumstoffe. Auch kompakte Systeme weisen einen hohen Lambda-Wert auf, der für die Anwendung nachteilig ist.

Die WO 2012/038215 A1 offenbart die Verwendung eines spezifischen Polyurethan (PUR)-Schaumreaktionssystems zur flächigen Fixierung von Vakuumisolationspaneelen (VIPs) an einer Wand einer Kühlvorrichtung sowie ein Verfahren zur Herstellung von Verbundkörpern, die eine Wand einer Kühlvorrichtung, eine PUR-Schaumschicht und mindestens ein VIP enthalten. Ein Verfahren zur Herstellung eines Verbundkörpers aus einem Vakuumisolationspaneel und einer Geräteaußenwand eines Kältegeräts unter Verwendung eines flüssigen PUR-Schaumreaktionsgemisches wird in der DE 10 2008 026 528 A1 beschrieben. Das PUR-Schaumreaktionsgemisch wird als aushärtbare Haftmittelschicht flächig auf die Innenseite der Außenwand einer Kühlvorrichtung und/oder auf die Außenseite einer Wand des Innenbehälters einer Kühlvorrichtung aufgebracht und das VIP darin eingelegt. Das Ausschäumen erfolgt in einer geschlossenen Form bis zur vollständigen Aushärtung des Reaktionsgemischs. Es wird erwähnt, dass das Schaumsystem mit erhöhter Dichte verarbeitet werden kann. Das verwendete PUR-Schaumreaktionsgemisch ist vorzugsweise ein langsam treibendes Schaumsystem, welches lediglich über die Faden- oder Abbindezeit von ca. 3 Minuten charakterisiert wird.

Ein weiteres Verfahren ist aus der WO 2015/153568 A1 bekannt.

Die aus dem Stand der Technik bekannten Verfahren haben häufig den Nachteil, dass vorgegebene Hohlräume ausgeschäumt werden müssen und so nur schlecht dünne Schichten ohne Fehlstellen gefertigt werden können. Außerdem sind vielfach stützende Konstruktionen nötig, um das empfindliche VIP während des Herstellungsprozesses vor Druck und Belastungen zu schützen.

Eine der vorliegenden Erfindung zugrundeliegende Aufgabe war es, stabile Verbundelemente und vereinfachte Verfahren zu deren Herstellung bereitzustellen. Eine der vorliegenden Erfindung zugrundeliegende Aufgabe war es, gut dämmende Verbundelemente und vereinfachte Verfahren zu deren Herstellung bereitzustellen.

Diese Aufgabe wird erfindungsgemäß gelöst durch ein Verfahren zur Herstellung eines Verbundelements umfassend eine erste und eine zweite Deckschicht, ein Vakuumisolationspaneel zwischen den beiden Deckschichten, Polyurethan-Hartschaum in Kontakt mit der ersten Deckschichten und der Unterseite des Vakuumisolationspaneels sowie Polyurethan-Hartschaum in Kontakt mit der zweiten Deckschicht und der Oberseite des Vakuumisolationspaneels, umfassend folgende Schritte:
(i) Auftragen eines Reaktionsgemisches (R1) zur Herstellung eines Polyurethan-Hartschaums auf die erste Deckschicht,
(ii) Inkontaktbringen der unteren Seite eines Vakuumisolationspaneels mit dem nicht ausgehärteten Reaktionsgemisch (R1),
(iii) Auftragen eines Reaktionsgemisches (R2) zur Herstellung eines Polyurethan-Hartschaums auf die obere Seite des Vakuumisolationspaneels,
(iv) Inkontaktbringen der zweiten Deckschicht mit der Schicht des nicht ausgehärteten Reaktionsgemischs (R2),
(v) Aushärten beider Polyurethan-Hartschaumsysteme (R1) und (R2) unter Erhalt des Verbundelements.

Unter dem Begriff "nicht ausgehärtet" wird im Rahmen der vorliegenden Erfindung verstanden, dass die Abbindezeit noch nicht erreicht ist. Die Abbindezeit eines Hartschaumsystems ist dabei die Zeit bis zum Abbinden des Polyurethanschaums, d.h. bis zu dem Zeitpunkt, an dem sich aus der Schaummasse mit einem Glasstab Fäden herausziehen lassen. Eine Methode zur Bestimmung der Abbindezeit ist in den Beispielen definiert.

Das erfindungsgemäße Verfahren hat den Vorteil, dass durch den schichtweisen Aufbau ein einfaches Fertigungsverfahren gegeben ist. Es müssen keine Hohlräume ausgeschäumt werden, so dass durchgehende gut dämmende Schichten erhalten werden, d.h. ohne Fehlstellen, die die Dämmwirkung verschlechtern würden.

Gemäß dem erfindungsgemäßen Verfahren wird zunächst ein Reaktionsgemisches (R1) zur Herstellung eines Polyurethan-Hartschaums auf eine erste Deckschicht aufgetragen. Mit dem nicht ausgehärteten Reaktionsgemisch (R1) wird dann die untere Seite eines Vakuumisolationspaneels in Kontakt gebracht, es wird ein Reaktionsgemisches (R2) zur Herstellung eines Polyurethan-Hartschaums auf die obere Seite des Vakuumisolationspaneels aufgebracht. Schließlich wird die zweite Deckschicht mit der Schicht des nicht ausgehärteten Reaktionsgemischs (R2) in Kontakt gebracht und es folgt das Aushärten beider Polyurethan-Hartschaumsysteme (R1) und (R2) unter Erhalt des Verbundelements.

Das erfindungsgemäße Verfahren hat somit den weiteren Vorteil, dass das VIP in das nicht ausgehärtete Reaktionsgemisch (R1) gelegt wird und sich somit bei der Schaumbildung die Schicht auch an den Kanten des VIPs bildet, die somit gut geschützt sind.

Die erfindungsgemäß eingesetzte erste und zweite Deckschicht können aus unterschiedlichsten Materialien bestehen, beispielsweise Metall, Kunststoff oder Holz. Für Bauanwendungen kommen auch Deckschichten aus Steinzeug, Beton oder Keramik in Frage. Die Deckschicht kann dabei glatt sein oder eine Form aufweisen, solange gewährleistet ist, dass das Reaktionsgemisch gut haftet. Erfindungsgemäß bevorzugt sind Deckschichten aus Metall.

Erfindungsgemäß bevorzugt ist somit ein wie zuvor beschriebenes Verfahren, wobei die Verbundelemente hergestellt werden, ohne dass noch fließfähige Ausgangsverbindungen für Polyurethan in einen Zwischenraum zwischen der ersten und zweiten Deckschicht eingebracht werden.

Bei dem erfindungsgemäßen Verfahren werden Reaktionsgemisch (R1) und (R2) eingesetzt. Reaktionsgemisch (R1) und (R2) sind erfindungsgemäß Reaktionsgemische zur Herstellung eines Polyurethan-Hartschaums. Üblicherweise enthalten die Reaktionsgemische (R1) und (R2) mindestens ein Polyisocyanat als Komponente A) und mindestens eine mehrfunktionelle gegenüber Isocyanaten reaktive Verbindung als Komponente B). Das Reaktionsgemisch (R1) und das Reaktionsgemisch (R2) enthalten bevorzugt weitere übliche Komponenten für die Herstellung von Polyurethanschäumen, wie beispielsweise Treibmittel, Katalysatoren, Schaumstabilisatoren und weitere Hilfsmitteln und/oder Zusatzstoffe.

Erfindungsgemäß umfassen die Reaktionsgemische (R1) und (R2) folgende Komponenten
A) mindestens ein Polyisocyanat,
B) mindestens eine mehrfunktionelle gegenüber Isocyanaten reaktive Verbindung,
C) mindestens ein Treibmittel,
D) mindestens einen Katalysator,
E) gegebenenfalls Schaumstabilisatoren und
F) gegebenenfalls weitere Hilfsmitteln und/oder Zusatzstoffe.

Das Reaktionsgemisch (R1) und das Reaktionsgemisch (R2) werden erfindungsgemäß durch Mischen der Komponenten in einem geeigneten Mischungsverhältnis erhalten und aufgebracht, solange das Gemisch nicht ausgehärtet ist. Dabei sind beispielsweise Mischungsverhältnisse der Polyolkomponente zum Isocyanat im Bereich von 100:70 bis 100:150, bevorzugt zwischen 100:80 bis 100:140 geeignet.

Das Reaktionsgemisch (R1) und das Reaktionsgemisch (R2) werden erfindungsgemäß aufgebracht und die Schaumbildung setzt ein. Zunächst wird das Reaktionsgemisches (R1) zur Herstellung eines Polyurethan-Hartschaums auf die erste Deckschicht aufgetragen. Das Reaktionsgemisch (R1) wird dann vor Erreichen der Abbindezeit mit der unteren Seite eines Vakuumisolationspaneels in Kontakt gebracht, so dass der sich bildende Schaum das VIP flächig berührt. Das Reaktionsgemisch (R2) zur Herstellung eines Polyurethan-Hartschaums wird bevorzugt auf die obere Seite des Vakuumisolationspaneels aufgebracht, bevorzugt vor der Abbindezeit des Reaktionsgemischs (R1).

Es wurde gefunden, dass bei der Auftragung des Reaktionsgemischs (R2) vor dem vollständigen Abbinden des Reaktionsgemischs (R1) eine bessere Verteilung des Reaktionsgemischs (R1) erreicht wird, so dass sich weniger Fehlstellen bilden. Dies führt letztlich zu einer besseren Wärmedämmung und auch zu einem besseren optischen Eindruck des erhaltenen Verbundelements.

Gemäß einer weiteren Ausführungsform betrifft die vorliegende Erfindung demgemäß ein Verfahren zur Herstellung eines Verbundelements wie zuvor beschrieben, wobei das Reaktionsgemisch (R2) aufgetragen wird, wenn das Reaktionsgemisch (R1) nicht ausgehärtet ist. Gemäß einer weiteren Ausführungsform betrifft die vorliegende Erfindung demgemäß ein Verfahren zur Herstellung eines Verbundelements wie zuvor beschrieben, wobei Schritt (iii) durchgeführt wird, solange das Reaktionsgemisch (R1) nicht ausgehärtet ist.

Gemäß einer weiteren Ausführungsform betrifft die vorliegende Erfindung demgemäß ein Verfahren zur Herstellung eines Verbundelements wie zuvor beschrieben, wobei die Komponenten A) bis F) so ausgewählt werden, dass ein geschlossenzelliger Polyurethan-Schaumstoff mit einer freigeschäumten Rohdichte nach DIN 53420 im Bereich von 30 bis 400 g/l, bevorzugt im Bereich von 40 bis 300 g/l, besonders bevorzugt im Bereich von 50 bis 150 g/l und einer Druckfestigkeit nach DIN ISO 844 EN DE (2014-11) von größer 140 kPa erhalten wird.

Vorzugsweise sind das Reaktionsgemisch (R1) und das Reaktionsgemisch (R2) Gemische zur Herstellung eines Polyurethanhartschaums, der vorzugsweise in einer dünnen Schicht aufgetragen werden kann und trotzdem eine ausreichende Festigkeit zur Stabilisierung des Verbundelements besitzt. Die freigeschäumte Rohdichte des erfindungsgemäß eingesetzten Polyurethanschaumstoffs wird nach DIN 53420 bestimmt und beträgt vorzugsweise 30 bis 400 g/l, insbesondere 40 bis 300 g/l, weiter bevorzugt 50 bis 150 g/l.

Die Druckfestigkeit des Schaumstoffes wird nach DIN ISO 844 EN DE (2014-11) bestimmt. Bei dem erfindungsgemäß eingesetzten Polyurethan-Schaumstoff handelt es sich danach um einen Halbhartschaum oder einen Hartschaum (nach DIN 7726).

Gemäß einer weiteren Ausführungsform betrifft die vorliegende Erfindung demgemäß ein Verfahren zur Herstellung eines Verbundelements wie zuvor beschrieben, wobei die freigeschäumte Rohdichte nach DIN 53420 des aus dem Reaktionsgemisch (R1) erhaltenen Polyurethan-Hartschaumstoffs oder des aus dem Reaktionsgemisch (R2) erhaltenen Polyurethan-Hartschaumstoffs im Verbundelement oder des aus dem Reaktionsgemisch (R1) und dem Reaktionsgemisch (R2) erhaltenen Polyurethan-Hartschaumstoffs im Bereich von 30 bis 400 g/l liegt.

Weiterhin ist es bevorzugt, dass Reaktionsgemisch (R1) und Reaktionsgemisch (R2)in dünnen Schichten aufgetragen werden. Ein geeignetes Maß ist die Flächendichte. Unter Flächendichte versteht man die eingetragene Masse Material, also die Reaktionsmischung beinhaltend die Komponenten A) bis G), pro Fläche. Die Flächendichte des erfindungsgemäß eingesetzten Reaktionsgemischs (R1) bzw. (R2) liegt im Bereich von 200 bis 9600 g/m², bevorzugt 230 bis 6000 g/m², besonders bevorzugt 260 bis 4500 g/m².

Der erfindungsgemäß eingesetzte Polyurethan-Schaumstoff ist bevorzugt geschlossenzellig (DIN 7726); der Anteil an offenen Zellen beträgt maximal 15 %.

Erfindungsgemäß wird als Komponente A) mindestens ein Polyisocyanat eingesetzt. Als organische Isocyanate können alle gewöhnlichen aliphatischen, cycloaliphatischen und bevorzugt aromatische Di- und/oder Polyisocyanate verwendet werden. Als bevorzugte Isocyanate können Toluoldiisocyanat (TDI) und/oder Diphenylmethandiisocyanat (MDI), vorzugsweise MDI, und besonders bevorzugt Mischungen aus MDI und polymerem Diphenylmethandiisocyanat (PMDI) eingesetzt werden. Diese besonders bevorzugten Isocyanate können ganz oder teilweise mit Uretdion-, Carbamat-, Isocyanurat-, Carbodiimid-, Allophanat und bevorzugt Urethangruppen modifiziert sein.

Erfindungsgemäß besonders geeignet sind beispielsweise Mischungen aus MDI und polymerem Diphenylmethandiisocyanat (PMDI), insbesondere polymerem Diphenylmethandiisocyanat (PMDI), das beispielsweise unter dem Handlesnamen Lupranat M20 von BASF SE erhältlich ist.

Weiterhin können als Isocyanat-Komponente Prepolymere sowie Mischungen aus den oben beschriebenen Isocyanaten und Prepolymeren eingesetzt werden. Diese Prepolymere werden aus den oben beschriebenen Isocyanaten sowie den weiter unten beschriebenen Polyethern, Polyestern oder beiden hergestellt und weisen einen NCO- Gehalt im Bereich von üblicherweise 14 bis 32 Gew.-%, bevorzugt 22 bis 30 Gew.-%, auf.

Als Komponente B) wird mindestens eine mehrfunktionelle gegenüber Isocyanaten reaktive Verbindung eingesetzt, wobei auch Mischungen mehrerer dieser Verbindungen als Komponente B) eingesetzt werden können. Als höhermolekulare Verbindungen mit gegenüber Isocyanaten reaktiven Gruppen können alle Verbindungen eingesetzt werden, die zumindest zwei gegenüber Isocyanaten reaktive Gruppen, wie OH-, SH-, NH- und CH-acide Gruppen aufweisen. Gewöhnlich werden Polyetherole und/oder Polyesterole mit 2 bis 8, vorzugsweise 2 bis 6, mit Isocyanat reaktiven Wasserstoffatomen eingesetzt. Die OH-Zahl dieser Verbindungen liegt üblicherweise im Bereich von 30 bis 850 mg KOH /g, vorzugsweise im Bereich von 100 bis 500 mg KOH/g gemessen nach DIN 53240 (1971-12).

Bei den Verbindungen mit mindestens zwei mit Isocyanatgruppen reaktiven Wasserstoffatomen handelt es sich in den meisten Fällen um mehrfunktionelle Alkohole. Die größte technische Bedeutung haben dabei, neben den Polyesteralkoholen, die Polyetheralkohole.

Die Herstellung der Polyetheralkohole erfolgt dabei zumeist durch Anlagerung von Alkylenoxiden, vorzugsweise Ethylenoxid und/oder Propylenoxid, an mehrfunktionelle Alkohole und/oder Amine. Die Anlagerung erfolgt dabei üblicherweise in Anwesenheit von Katalysatoren.

Alle diese Verfahren sind dem Fachmann bekannt. Eine zusammenfassende Übersicht über die Herstellung von PUR-Schaumstoffen wurde z.B. publiziert in Polyurethane, KunststoffHandbuch, Band 7, 1. Auflage 1966, herausgegeben von Dr. R. Vieweg und Dr. A. Höchtlen, und 2. Auflage 1983, herausgegeben von Dr. Günter Oertel, Carl Hanser Verlag München, Wien.

Die Polyetherole werden nach bekannten Verfahren, beispielsweise durch anionische Polymerisation von Alkylenoxiden unter Zusatz mindestens eines Startermoleküls, das 2 bis 8, vorzugsweise 2 bis 6, reaktive Wasserstoffatome gebunden enthält, in Gegenwart von Katalysatoren erhalten. Als Katalysatoren können Alkalihydroxide, wie Natrium- oder Kaliumhydroxid oder Alkalialkoholate, wie Natriummethylat, Natrium- oder Kaliumethylat oder Kaliumisopropylat, oder bei kationischer Polymerisation Lewis Säuren, wie Antimonpentachlorid, Bortrifluorid-Etherat oder Bleicherde als Katalysatoren eingesetzt werden. Weiter können als Katalysatoren auch Doppelmetallcyanid-Verbindungen, sogenannte DMC-Katalysatoren, eingesetzt werden. Auch eine Amin-Katalyse, beispielsweise mit Imidazol ist möglich. Geeignete Katalysatoren werden beispielsweise in der EP 2 563 833 A1 oder EP 2 563 860 A2 beschrieben.

Vorzugsweise werden als Alkylenoxide eine oder mehrere Verbindungen mit 2 bis 4 Kohlenstoffatomen im Alkylenrest, wie Ethylenoxid, 1,2-Propylenoxid, Tetrahydrofuran, 1 ,3-Propylenoxid, 1 ,2- bzw. 2,3-Butylenoxid, jeweils alleine oder in Form von Mischungen, besonders bevorzugt Ethylenoxid und/oder 1 ,2-Propylenoxid, eingesetzt.

Als Startsubstanzen kommen insbesondere Verbindungen mit mindestens 2, vorzugsweise 2 bis 8 Hydroxylgruppen oder mit mindestens einer primären Aminogruppe im Molekül zum Einsatz. Als Startsubstanzen mit mindestens 2, vorzugsweise 2 bis 8 Hydroxylgruppen im Molekül kommen beispielsweise Ethylenglykol, Diethylenglykol, Glycerin, Trimethylolpropan, Pentaerythrit, Zuckerderivate, wie Saccharose, Hexitderivate, wie Sorbit oder Mannit in Frage, vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens einer primären Aminogruppe im Molekül werden vorzugsweise aromatische Di- und/oder Polyamine, beispielsweise Phenylendiamine, und 4,4'-, 2,4'- und 2,2'-Diamino-diphenylmethan sowie aliphatische Di- und Polyamine, wie Ethylendiamin, eingesetzt. Geeignet sind auch Ethanolamin oder auch Toluoldiamine, bevorzugt vic-Toluylendiamin.

Bevorzugt sind im Rahmen der vorliegenden Erfindung Verbindungen basierend auf Glyzerin und Propylenoxid, Saccharose/Pentaerythrit/Diethylenglykol und Propylenoxid, Monopropylenglykol und Propylenoxid , Saccharose/Glyzerin und Propylenoxid, Toluylendiamin (TDA) und Ethylenoxid und/oder Propylenoxid.

Die eingesetzten Polyesteralkohole werden zumeist durch Kondensation von mehrfunktionellen Alkoholen mit 2 bis 12 Kohlenstoffatomen, wie Ethylenglykol, Diethylenglykol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure, den Isomeren von Naphthalindicarbonsäuren oder den Anhydriden der genannten Säuren, hergestellt.

Als weitere Ausgangsstoffe bei der Herstellung der Polyester können auch hydrophobe Stoffe mit verwendet werden. Bei den hydrophoben Stoffen handelt es sich um wasserunlösliche Stoffe, die einen unpolaren organischen Rest enthalten sowie über mindestens eine reaktive Gruppe, ausgewählt aus Hydroxyl, Carbonsäure, Carbonsäurester oder Mischungen daraus, verfügen. Das Äquivalentgewicht der hydrophoben Materialen liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl.

Die eingesetzten Polyesterole haben vorzugsweise eine Funktionalität im Bereich von 1,5 bis 5, besonders bevorzugt 1,8 bis 3,5.

Ferner können weitere Polyole eingesetzt werden, beispielsweise aliphatische, cycloaliphatische und/oder aromatische Diole mit 2 bis 14, vorzugsweise 2 bis 10 Kohlenstoffatomen, wie Ethylenglykol, 1 ,2-, 1 ,3-Propandiol, 1 ,2-, 1 ,3-Pentandiol, 1 ,10-Decandiol, 1 ,2-, 1 ,3-, 1 ,4-Dihydroxycyclohexan, Di- und Triethylenglykol, Di- und Tripropylenglykol, 1 ,4-Butandiol, 1 ,6-Hexandiol und Bis-(2-hydroxyethyl)-hydrochinon, Triole, wie 1 ,2,4-, 1 ,3,5-Trihydroxycyclohexan, Glycerin und Trimethylolpropan, und niedermolekulare hydroxylgruppenhaltige Polyalkylenoxide auf Basis Ethylen- und/oder 1 ,2-Propylenoxid und den vorgenannten Diolen und/oder Triolen als Startermoleküle

Gemäß einer weiteren Ausführungsform betrifft die vorliegende Erfindung demgemäß ein Verfahren zur Herstellung eines Verbundelements wie zuvor beschrieben, wobei Komponente B) mindestens ein Polyetherpolyol mit einer Funktionalität von 3 bis 8 und einer Hydroxylzahl im Bereich von 300 bis 500 enthält.

Gemäß einer weiteren Ausführungsform betrifft die vorliegende Erfindung demgemäß ein Verfahren zur Herstellung eines Verbundelements wie zuvor beschrieben, wobei Komponente B) mindestens ein Polyetherpolyol mit einer Funktionalität von 3 bis 8 und einer Hydroxylzahl im Bereich von 130 bis 200 enthält.

Gemäß einer weiteren Ausführungsform betrifft die vorliegende Erfindung demgemäß ein Verfahren zur Herstellung eines Verbundelements wie zuvor beschrieben, wobei Komponente B) mindestens einen Kettenverlängerer mit einer Funktionalität von zwei umfasst.

Werden als Isocyanate Isocyanatprepolymere eingesetzt, wird der Gehalt an Verbindungen mit gegenüber Isocyanaten reaktiven Gruppen, inklusive den zur Herstellung der Isocyanatprepolymere eingesetzten Verbindungen mit gegenüber Isocyanaten reaktiven Gruppen berechnet.

Als Treibmittel wird vorzugsweise ein Treibmittelgemisch, enthaltend Wasser, eingesetzt. Dabei kann Wasser alleine oder in Kombination mit weiteren Treibmitteln eingesetzt werden. Der Gehalt an Wasser im Treibmittel ist vorzugsweise grösser als 40 Gew.-%, besonders bevorzugt grösser als 60 Gew.-% und ganz besonders bevorzugt grösser als 80 Gew.-%, bezogen auf das Gesamtgewicht des Treibmittels.

Insbesondere wird Wasser als alleiniges Treibmittel eingesetzt. Werden neben Wasser weitere Treibmittel eingesetzt, können beispielsweise Fluorchlorkohlenwasserstoffe, gesättigte und ungesättigte Fluorkohlenwasserstoffe, Kohlenwasserstoffe, Säuren und/oder flüssiges bzw. gelöstes Kohlendioxid verwendet werden. Ungesättigte Fluorkohlenwasserstoffe werden auch als HFO bezeichnet, abgeleitet von der englischen Bezeichnung Hydrofluoroolefin. In einer weiteren Ausführungsform kann als Treibmittel eine Mischung aus Wasser und Ameisensäure und/oder Kohlendioxid eingesetzt werden.

Der Treibmittelgehalt, bevorzugt der Wassergehalt, bezogen auf das Gesamtgewicht der Komponenten (B) bis (F), im Bereich von 0,05 bis 4 Gew.-%, besonders bevorzugt 0, 1 bis 3 Gew.-%.

Gemäß einer weiteren Ausführungsform betrifft die vorliegende Erfindung demgemäß ein Verfahren zur Herstellung eines Verbundelements wie zuvor beschrieben, wobei Wasser als alleiniges Treibmittel C) eingesetzt wird.

Gemäß einer weiteren Ausführungsform betrifft die vorliegende Erfindung demgemäß ein Verfahren zur Herstellung eines Verbundelements wie zuvor beschrieben, wobei die eingesetzte Menge an Wasser bezogen auf das Gesamtgewicht der Komponenten B) bis F) im Bereich von 0,05 bis 4 Gew.-% liegt.

Als Katalysatoren können alle Verbindungen eingesetzt werden, die die Isocyanat-Wasser-Reaktion oder die Isocyanat-Polyol-Reaktion beschleunigen. Solche Verbindungen sind bekannt und beispielsweise im "Kunststoffhandbuch, Band 7, Polyurethane", Carl Hanser Verlag, 3. Auflage 1993, Kapitel 3.4.1 beschrieben. Diese umfassen aminbasierte Katalysatoren und Katalysatoren auf Basis von organischen Metallverbindungen.

Als Katalysatoren auf Basis von organischen Metallverbindungen können beispielsweise organische Zinnverbindungen, wie Zinn-(II)-salze von organischen Carbonsäuren, wie Zinn-(II)-acetat, Zinn-(II)-octoat, Zinn-(II)-ethylhexoat und Zinn-(II)-Iaurat und die Dialkylzinn-(IV)-salze von organischen Carbonsäuren, wie Dibutylzinndiacetat, Dibutylzinndilaurat, Dibutylzinnmaleat und Dioctylzinndiacetat, sowie Bismutcarboxylate wie Bismut(III)-neodecanoat, Bismut-2-ethylhexanoat und Bismutoctanoat oder Alkali-salze von Carbonsäuren, wie Kaliumacetat oder Kaliumformiat eingesetzt werden.

Vorzugsweise wird als Katalysator eine Mischung, enthaltend zumindest ein tertiäres Amin, eingesetzt. Bei diesen tertiären Aminen kann es sich auch um Verbindungen handeln, die auch gegenüber Isocyanat reaktive Gruppen, wie OH-, NH- oder NH2-Gruppen, tragen können. Einige der am häufigsten eingesetzten Katalysatoren sind Bis(2-Dimethyl-aminoethyl)ether, N,N,N,N,N-Pentamethyldiethylentriamin, N,N,N-Triethylamino-ethoxyethanol, Dimethylcyclohexylamin, Dimethylbenzylamin, Triethylamin, Triethylendiamin, Pentamethyldipropylentriamin, Dimethylethanolamin, N-Methylimidazol, N-Ethylimidazol, Tetramethylhexamethylendiamin, Tris-(Dimethylaminopropyl)hexahydrotriazin, Dimethylaminopropylamin, N-Ethylmorpholin, Diazabicycloundecen und Diazabicyclononen. Vorzugsweise werden als Katalysatoren (e) Mischungen eingesetzt, die zumindest zwei unterschiedliche tertiäre Amine enthalten.

Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxalkylen-Mischpolymerisate und andere Organopolysiloxane. Ferner Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A oder Mischungen aus zwei oder mehreren dieser Schaumstabilisatoren.

Schaumstabilisatoren werden bevorzugt in einer Menge von 0,5 bis 4 Gew.-, besonders bevorzugt 1 bis 3 Gew.-%, bezogen auf das Gesamtgewicht der Komponenten (B) bis (F), verwendet. Als weitere Additive können Füllstoffe und sonstige Zusatzstoffe, wie Antioxidantien eingesetzt werden. Übliche Zusatzstoffe sind dem Fachmann bekannt.

Erfindungsgemäß unterscheidet sich die Zusammensetzung des Reaktionsgemischs (R1) und des Reaktionsgemischs (R2) in Bezug auf mindestens eine der Komponenten B) bis F) voneinander.

Reaktionsgemisch (R1) und Reaktionsgemisch (R2) können sich beispielsweise hinsichtlich der Dichte, der Polyolzusammensetzung und des eingesetzten Treibmittels unterscheiden. Erfindungsgemäß hat das Reaktionsgemisch (R1) eine längere Abbindezeit als das Reaktionsgemisch (R2).

Die erfindungsgemäß verwendeten Vakuumisolationspaneelen (VIPs) bestehen in der Regel aus einem Kernmaterial, beispielsweise offenzelligem Polyurethan (PUR)-Hartschaum, offenzelligem extrudiertem Polystyrolschaum, Kieselgelen, Glasfasern, Kunststoffschüttungen, gepresstem Mahlgut aus PUR-Hartschaum bzw. - Halbhartschaum, Perlite, welches in eine gasdichte Folie verpackt, evakuiert und luftdicht eingeschweißt wird. Das Vakuum ist bevorzugt kleiner 100 mbar sein. Bei diesem Vakuum kann eine Wärmeleitfähigkeit der Paneele je nach Struktur und Porengröße des Kernmaterials von unter 10 mW/mK erreicht werden. Geeignete Kernmaterialien sind beispielsweise Sica, Glasfasern oder auch Polyurethane.

Erfindungsgemäß bevorzugt sind als Kernmaterialien druckfeste Materialien wie Polyurethane, Polystyrol oder verpresstes Silica, beispielsweise mit einer Dichte von größer 180 g/l. Es hat sich überraschend gezeigt, dass Kernmaterialien mit einer höheren Druckfestigkeit im nicht evakuierten Zustand, insbesondere solche mit einer Druckfestigkeit von größer als 160 kPa, zu einer besseren, gleichmäßigeren Materialverteilung führen und somit die Prozessführung, beispielsweise das Einbringen der VIPs oder auch eine gezielte Entlüftung, um Fehlstellen zu vermeiden, und die Qualität des Formkörpers, beispielsweise die Oberflächengüte, verbessern.

Erfindungsgemäß werden eine erste und eine zweite Deckschicht eingesetzt, die aus dem gleichen oder unterschiedlichen Material bestehen können und unterschiedliche Formen aufweisen können. Dabei kann beispielsweise eine Deckschicht aus Kunststoff bestehen und die zweite aus Metall.

Erfindungsgemäß wird das Reaktionsgemisch (R1) auf die erste Deckschicht aufgebracht. Dabei wird das Verfahren vorzugsweise so durchgeführt, dass ein Wegfließen des Reaktionsgemisches verhindert wird. Beispielsweise kann dazu ein Rahmen eingesetzt werden.

Gemäß einer weiteren Ausführungsform betrifft die vorliegende Erfindung demgemäß ein Verfahren zur Herstellung eines Verbundelements wie zuvor beschrieben, wobei das Auftragen des nicht ausgehärteten Reaktionsgemischs (R1) in eine Vorrichtung erfolgt, die so ausgestaltet ist, dass das Wegfließen der Ausgangsverbindungen aus dem Bereich der ersten Deckschicht verhindert wird.

Gemäß einer weiteren Ausführungsform betrifft die vorliegende Erfindung demgemäß ein Verfahren zur Herstellung eines Verbundelements wie zuvor beschrieben, wobei die Vorrichtung eine Presse ist.

Gemäß einer bevorzugten Ausführungsform ist die Haltevorrichtung eine Presse. Die obere Begrenzung wirkt in diesem Fall als Gegengewicht. Das Gegengewicht kann dabei definiert verschoben werden, um einen bestimmten Abstand einstellen zu können. Diese bevorzugte Vorrichtung zeichnet sich dadurch aus, dass der Aufbau an den Seiten offen ist. Die erste Deckschicht wird auf die untere Begrenzung der Haltevorrichtung gelegt. Wahlweise kann zusätzlich ein Formrahmen verwendet werden, der die auszufüllende Fläche auf der Innenseite begrenzt. Dann wird das erfindungsgemäß verwendete Reaktionsgemisch (R1) (ggf. in den Formrahmen) flächig auf die erste Deckschicht aufgebracht, wobei sich eine Flächendichte im Bereich von 200 bis 9600 g/m² als vorteilhaft erwiesen hat. Mindestens ein VIP wird auf das nicht ausgehärtete Reaktionsgemisch (R1) gelegt und die Schichtdicke des PUR-Schaums wird wie oben beschrieben eingestellt. Vor dem Aushärten des Reaktionsgemischs (R1) wird das Reaktionsgemisch (R2) auf die obere Seite des VIPs aufgebracht und schließlich die zweite Deckschicht. Anschließend erfolgt das Aushärten des Schaumsystems (R1) und (R2), wobei dazu vorzugsweise eine Temperaturbehandlung erfolgt.

Gemäß einer weiteren Ausführungsform betrifft die vorliegende Erfindung demgemäß ein Verfahren zur Herstellung eines Verbundelements wie zuvor beschrieben, wobei Schritt (v) bei einer Temperatur im Bereich von 35 bis 80 °C durchgeführt wird.

Gemäß einer weiteren Ausführungsform betrifft die vorliegende Erfindung demgemäß ein Verfahren zur Herstellung eines Verbundelements wie zuvor beschrieben, wobei Schritt (v) in einer Presse durchgeführt wird. Vorzugsweise erfolgen auch die übrigen Schritte des erfindungsgemäßen Verfahrens in einer Presse.

Die erfindungsgemäßen Verbundelemente sind für verschiedene Anwendungen geeignet. Eine mögliche Anwendung ist beispielsweise als Bauteil, insbesondere als Tür einer Kühlvorrichtung. Unter Kühlvorrichtungen werden erfindungsgemäß unter anderem Kühlgerätegehäuse (z.B. von Kühlschränken), Behälter für Kühlfahrzeuge, Kühlboxen, Kühlzellen oder Fernwärmerohre verstanden. Weiter sind die Verbundelemente für Bauanwendungen geeignet, beispielsweise als wärmedämmende Verkleidungen im Innenausbau oder als Fassadendämmung im Außenbereich.

Die Wand der Kühlvorrichtung ist entweder die Innenseite der Außenwand einer Kühlvorrichtung oder die Außenseite einer Wand des Innenbehälters. Als Außenwand einer Kühlvorrichtung wird auch die Tür einer Kühlvorrichtung (z.B. eines Kühlschranks) und als Wand des Innenbehälters wird auch die Innenverkleidung einer Tür einer Kühlvorrichtung betrachtet.

Die Außenwand ist üblicherweise aus Metall, wohingegen die Innenbehälter und -Verkleidungen im Allgemeinen und insbesondere bei Kühlschränken aus einem Kunststoffmaterial sind.

Gemäß einer anderen Ausführungsform kann die Herstellung der Verbundkörper auch in einer im Kühlschrankbau üblichen, rundum geschlossenen Form erfolgen. Diese Variante ist bevorzugt, wenn das VIP auf die Außenwand des Innengehäuses der Kühlvorrichtung aufgebracht wird oder auf die Innenverkleidung der Tür der Kühlvorrichtung.

Gemäß einer weiteren Ausführungsform betrifft die vorliegende Erfindung demgemäß ein Verfahren zur Herstellung eines Verbundelements wie zuvor beschrieben, wobei das Verbundelement ein Kühlschrankbauteil ist.

Gemäß einer weiteren Ausführungsform betrifft die vorliegende Erfindung demgemäß ein Verfahren zur Herstellung eines Verbundelements wie zuvor beschrieben, wobei das Verbundelement ein Sandwichelement ist.

Weiter betrifft die vorliegende Erfindung ein Verbundelement erhältlich oder erhalten gemäß einem Verfahren wie zuvor beschrieben.

Demgemäß betrifft die vorliegende Erfindung ein Verbundelement erhältlich oder erhalten gemäß einem Verfahren zur Herstellung eines Verbundelements umfassend eine erste und eine zweite Deckschicht, ein Vakuumisolationspaneel zwischen den beiden Deckschichten, Polyurethan-Hartschaum in Kontakt mit der ersten Deckschichten und der Unterseite des Vakuumisolationspaneels sowie Polyurethan-Hartschaum in Kontakt mit der zweiten Deckschicht und der Oberseite des Vakuumisolationspaneels, umfassend folgende Schritte:
(i) Auftragen eines Reaktionsgemisches (R1) zur Herstellung eines Polyurethan-Hartschaums auf die erste Deckschicht,
(ii) Inkontaktbringen der unteren Seite eines Vakuumisolationspaneels mit dem nicht ausgehärteten Reaktionsgemisch (R1),
(iii) Auftragen eines Reaktionsgemisches (R2) zur Herstellung eines Polyurethan-Hartschaums auf die obere Seite des Vakuumisolationspaneels,
(iv) Inkontaktbringen der zweiten Deckschicht mit der Schicht des nicht ausgehärteten Reaktionsgemischs (R2),
(v) Aushärten beider Polyurethan-Hartschaumsysteme (R1) und (R2) unter Erhalt des Verbundelements.

Die erfindungsgemäßen Verbindelemente sind formstabil und können für verschiedene Anwendungen eingesetzt werden, beispielsweise als dämmende Konstruktionsstoffe. Die vorliegende Erfindung betrifft auch die Verwendung eines erfindungsgemäßen Verbundelements oder eines Verbundelements erhältlich oder erhalten nach einem erfindungsgemäßen Verfahren als Bauteile für Kühlgeräte oder als Baumaterial. Beispielhaft genannt seien Dämmplatte, Kühlaufbauten in LKWs, Rohrdämmung, Spezialanwendungen für Dämmung im Bau, beispielsweise Fensterprofile, Dachsparrendämmung.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird.

Die nachfolgenden Beispiele dienen der Veranschaulichung der Erfindung, sind aber in keiner Weise einschränkend hinsichtlich des Gegenstands der vorliegenden Erfindung.

### BEISPIELE

### 1. Versuchsbeschreibung

**Tabelle 1.: Details der Schaumsysteme**

| **Schaumsystem** | **Startzeit [s]** | **Abbindezeit [s]** | **Freie Rohdichte [g/l]** | **Verdichtungsfaktor** | **Formteildichte [g/l]** |
|---|---|---|---|---|---|
| R1 | 25 | 115 | 80 | 1,96 | 158 |
| R2 | 5 | 50 | 32 | 1,10 | 35 |
| R3 | 6 | 50 | 80 | 1,20 | 96 |

In einer Form wird ein Kunststoff-Inliner vorgelegt. Dann wird das erste Reaktionsgemisch (R1) zur Herstellung eines Polyurethan-Schaums auf die erste Deckschicht aufgetragen. Dabei wurde ausreichend R1 eingetragen, um ein Volumen von 12 l zu füllen und eine Formteildichte von ∼158 g/l bei einer Schaumdicke von ca. 5 mm zu erhalten. Sofort nach Beendigung der Eintragung von R1 (Eintragsdauer T_{E1} siehe Tabelle 2) wird ein Silica-VIP mit den Maßen 1300x5600x15mm mit dem noch nicht abgebundenen Reaktionsgemisch R1 in Kontakt gebracht. Zum Zeitpunkt T_{S} wird wie in Tabelle 2 angegeben ein zweites Reaktionsgemisch (R2 oder R3) eingetragen, wobei ausreichend eingetragen wird, um ein Volumen von 71 l zu füllen. Sofort nach Beendigung der Eintragung des zweiten Reaktionsgemisches (Eintragsdauer T_{E2} oder T_{E3} siehe Tabelle 2) wird eine Metalldeckschicht aufgelegt und die Form geschlossen. Während des gesamten Versuchs betrug die Formtemperatur unten 43 °C und oben 41 °C. Nach 20 min wird die Form geöffnet, das Bauteil entnommen und die Ebenmäßigkeit der Oberfläche optisch bewertet. Eine gute optische Bewertung des Bauteils entspricht einer hohen Ebenmäßigkeit der Oberfläche.

**Tabelle 2. Experimentelle Details**

| | Beispiel 1 | Beispiel 2 | Vergleichsbeispiel |
|---|---|---|---|
| Erstes Schaumsystem | R1 | R1 | R1 |
| Eintragsdauer T_{E1} [in s] | 6 | 6 | 6 |
| Zweites Schaumsystem | R2 | R3 | R2 |
| Zeitpunkt Eintrag zweites Schaumsystem T_{S} | 42 | 44 | 85 |
| [in s] | | | |
| Eintragsdauer T_{E2} [in s] | 6 | - | 6 |
| Eintragsdauer T_{E3} [in s] | - | 10 | - |
| Optische Bewertung Bauteil | + | + | - |

### 2. Ergebnisse

In den erfindungsgemäßen Beispielen 1 und 2 wird das zweite Schaumsystem (R2 bzw. R3) zum Zeitpunkt Ts (42 s bzw. 44 s) eingetragen. Die Abbindezeit von R2 und R3 beträgt 50s. Die Summe aus Abbindezeit zweites Schaumsystem (R2 bzw. R3) und Eintragszeitpunkt T_{S} ist somit in beiden Fällen kleiner als die Abbindezeit von R1 (115 s, siehe Tabelle 1). Es wurde ein Verbundelement erhalten, das nach optischer Bewertung keine Fehlstellen aufwies.

Im Vergleichsbeispiel wird R2 zum Zeitpunkt T_{S} = 85 s eingetragen. Die Abbindezeit von R2 beträgt 50s. Die Summe aus Abbindezeit R2 und Eintragszeitpunkt T_{S} beträgt somit 135 s. Dies ist 20 s länger als die Abbindezeit von R1 (115s, siehe Tabelle 1). Es wurde ein Verbundelement mit Fehlstellen und somit schlechten Oberflächen erhalten.

### 3. Definitionen

### 3.1 Startzeit [s]

Die Startzeit ist definiert als Zeitspanne zwischen Rührbeginn bzw. Schussbeginn und dem Anfang der Volumenexpansion des Reaktionsgemisches durch Schaumbildung.

### 3.2 Fadenzieh-/Abbindezeit [s]

Die Zeit vom Beginn der Durchmischung bis zum Zeitpunkt des Reaktionsvorganges, an dem sich aus der Schaummasse mit einem Glasstab Fäden heraus-ziehen lassen.

### 3.3 Steigzeit [s]

Die Steigzeit ist definiert als Zeitspanne zwischen Rührbeginn und dem Ende der Volumenexpansion. Sie wird bestimmt durch Steighöhen-Beobachtung der Schaumkrone.

## Patentansprüche

1. Verfahren zur Herstellung von Verbundelementen umfassend eine erste und eine zweite Deckschicht, ein Vakuumisolationspaneel zwischen den beiden Deckschichten, Polyurethan-Hartschaum in Kontakt mit der ersten Deckschichten und der Unterseite des Vakuumisolationspaneels sowie Polyurethan-Hartschaum in Kontakt mit der zweiten Deckschicht und der Oberseite des Vakuumisolationspaneels, umfassend folgende Schritte:
(i) Auftragen eines Reaktionsgemisches (R1) zur Herstellung eines Polyurethan-Hartschaums auf die erste Deckschicht,
(ii) Inkontaktbringen der unteren Seite eines Vakuumisolationspaneels mit dem nicht ausgehärteten Reaktionsgemisch (R1),
(iii) Auftragen eines Reaktionsgemisches (R2) zur Herstellung eines Polyurethan-Hartschaums auf die obere Seite des Vakuumisolationspaneels,
(iv) Inkontaktbringen der zweiten Deckschicht mit der Schicht des nicht ausgehärteten Reaktionsgemischs (R2),
(v) Aushärten beider Polyurethan-Hartschaumsysteme (R1) und (R2) unter Erhalt des Verbundelements,
wobei das Reaktionsgemisch (R1) und (R2) folgende Komponenten umfassen
A) mindestens ein Polyisocyanat,
B) mindestens eine mehrfunktionelle gegenüber Isocyanaten reaktive Verbindung,
C) mindestens ein Treibmittel,
D) mindestens einen Katalysator,
E) gegebenenfalls Schaumstabilisatoren und
F) gegebenenfalls weitere Hilfsmitteln und/oder Zusatzstoffe, und
wobei sich die Zusammensetzung des Reaktionsgemischs (R1) und des Reaktionsgemischs (R2) in Bezug auf mindestens eine der Komponenten B) bis F) voneinander unterscheidet, und
wobei das Reaktionsgemisch (R1) eine längere Abbindezeit als das Reaktionsgemisch (R2) hat.

2. Verfahren gemäß Anspruch 1, wobei das Reaktionsgemisch (R2) aufgetragen wird, wenn das Reaktionsgemisch (R1) nicht ausgehärtet ist.

3. Verfahren gemäß einem der Ansprüche 1 oder 2, wobei die Komponenten A) bis F) so ausgewählt werden, dass ein geschlossenzelliger Polyurethan-Schaumstoff mit einer freigeschäumten Rohdichte nach DIN 53420 im Bereich von 30 bis 400 g/l und einer Druckfestigkeit nach DIN ISO 844 EN DE (2014-11) von größer 140 kPa erhalten wird.

4. Verfahren gemäß einem der Ansprüche 1 bis 3, wobei Wasser als alleiniges Treibmittel C) eingesetzt wird.

5. Verfahren gemäß einem der Ansprüche 1 bis 4, wobei die eingesetzte Menge an Wasser bezogen auf das Gesamtgewicht der Komponenten B) bis F) im Bereich von 0,05 bis 4 Gew.-% liegt.

6. Verfahren gemäß einem der Ansprüche 1 bis 5, wobei die freigeschäumte Rohdichte nach DIN 53420 des aus dem Reaktionsgemisch (R1) erhaltenen Polyurethan-Hartschaumstoffs oder des aus dem Reaktionsgemisch (R2) erhaltenen Polyurethan-Hartschaumstoffs im Verbundelement oder des aus dem Reaktionsgemisch (R1) und dem Reaktionsgemisch (R2) erhaltenen Polyurethan-Hartschaumstoffs im Bereich von 30 bis 400 g/l liegt.

7. Verfahren gemäß einem der Ansprüche 1 bis 6, wobei Komponente B) mindestens ein Polyetherpolyol mit einer Funktionalität von 3 bis 6 und einer Hydroxylzahl im Bereich von 300 bis 500 enthält.

8. Verfahren gemäß einem der Ansprüche 1 bis 7, wobei das Auftragen des nicht ausgehärteten Reaktionsgemischs (R1) in eine Vorrichtung erfolgt, die so ausgestaltet ist, dass das Wegfließen der Ausgangsverbindungen aus dem Bereich der ersten Deckschicht verhindert wird.

9. Verfahren gemäß Anspruch 8, wobei die Vorrichtung eine Presse ist.

10. Verfahren gemäß einem der Ansprüche 1 bis 9, wobei Schritt (v) bei einer Temperatur im Bereich von 35 bis 80 °C durchgeführt wird.

11. Verfahren gemäß einem der Ansprüche 1 bis 10, wobei Schritt (v) in einer Presse durchgeführt wird.

12. Verfahren gemäß einem der Ansprüche 1 bis 11, wobei das Verbundelement ein Kühlschrankbauteil oder ein Sandwichelement ist.

13. Verbundelement erhältlich oder erhalten gemäß einem Verfahren gemäß einem der Ansprüche 1 bis 12.

14. Verwendung eines Verbundelements gemäß Anspruch 13 oder eines Verbundelements erhältlich oder erhalten gemäß einem Verfahren gemäß einem der Ansprüche 1 bis 12 als Bauteile für Kühlgeräte oder als Baumaterial.

## Claims

1. A process for the production of composite elements comprising a first and a second outer layer, a vacuum insulation panel between the two outer layers, rigid polyurethane foam in contact with the first outer layer and the underside of the vacuum insulation panel, and also rigid polyurethane foam in contact with the second outer layer and the upper side of the vacuum insulation panel, comprising the following steps:
(i) application of a reaction mixture (R1) for the production of a rigid polyurethane foam onto the first outer layer,
(ii) bringing the lower side of a vacuum insulation panel into contact with the unhardened reaction mixture (R1),
(iii) application of a reaction mixture (R2) for the production of a rigid polyurethane foam to the upper side of the vacuum insulation panel,
(iv) bringing the second outer layer into contact with the layer of the unhardened reaction mixture (R2),
(v) hardening of the two rigid polyurethane foam systems (R1) and (R2) to give the composite element,
where the reaction mixtures (R1) and (R2) comprise the following components:
A) at least one polyisocyanate,
B) at least one polyfunctional compound reactive toward isocyanates,
C) at least one blowing agent,
D) at least one catalyst,
E) optionally foam stabilizers and
F) optionally further auxiliaries and/or additional substances,
where the difference between the composition of the reaction mixture (R1) and of the reaction mixture (R2) relates to at least one of the components B) to F), and
where the reaction mixture (R1) has a longer fiber time than the reaction mixture (R2).

2. The process according to claim 1, where the reaction mixture (R2) is applied while the reaction mixture (R1) is unhardened.

3. The process according to either of claims 1 and 2, where components A) to F) are selected in such a way as to give a closed-cell polyurethane foam with free-foamed envelope density in accordance with DIN 53420 in the range from 30 to 400 g/l and with compressive strength in accordance with DIN ISO 844 EN DE (2014-11) greater than 140 kPa.

4. The process according to any of claims 1 to 3, where water is used as sole blowing agent C).

5. The process according to any of claims 1 to 4, where the quantity of water used, based on the total weight of components B) to F), is in the range from 0.05 to 4% by weight.

6. The process according to any of claims 1 to 5, where the free-foamed envelope density in accordance with DIN 53420 of the rigid polyurethane foam obtained from the reaction mixture (R1) or of the rigid polyurethane foam obtained from the reaction mixture (R2) in the composite element or of the rigid polyurethane foam obtained from the reaction mixture (R1) and the reaction mixture (R2) is in the range from 30 to 400 g/l.

7. The process according to any of claims 1 to 6, where component B) comprises at least one polyether polyol with functionality from 3 to 6 and with hydroxy number in the range from 300 to 500.

8. The process according to any of claims 1 to 7, where the unhardened reaction mixture (R1) is applied into a device designed to prevent flow of the starting compounds away from the region of the first outer layer.

9. The process according to claim 8, where the device is a press.

10. The process according to any of claims 1 to 9, where step (v) is carried out at a temperature in the range from 35 to 80°C.

11. The process according to any of claims 1 to 10, where step (v) is carried out in a press.

12. The process according to any of claims 1 to 11, where the composite element is a refrigerator component or a sandwich element.

13. A composite element obtainable or obtained by a process according to any of claims 1 to 12.

14. The use of a composite element according to claim 13 or of a composite element obtainable or obtained by a process according to any of claims 1 to 12 as component for refrigeration equipment or as construction material.

## Revendications

1. Procédé pour la préparation d'éléments composites comprenant une première et une deuxième couche supérieure, un panneau d'isolation sous vide entre les deux couches supérieures, de la mousse dure de polyuréthane en contact avec les premières couches supérieures et la face inférieure du panneau d'isolation sous vide ainsi que de la mousse dure de polyuréthane en contact avec la deuxième couche supérieure et la face supérieure du panneau d'isolation sous vide, comprenant les étapes suivantes :
(i) dépôt d'un mélange réactionnel (R1) pour la préparation d'une mousse dure de polyuréthane sur la première couche supérieure,
(ii) mise en contact de la face inférieure du panneau d'isolation sous vide avec le mélange réactionnel (R1) non durci,
(iii) dépôt d'un mélange réactionnel (R2) pour la préparation d'une mousse dure de polyuréthane sur la face supérieure du panneau d'isolation sous vide,
(iv) mise en contact de la deuxième couche supérieure avec la couche du mélange réactionnel (R2) non durcie,
(v) durcissement des deux systèmes de mousse dure de polyuréthane (R1) et (R2) avec obtention de l'élément composite,
le mélange réactionnel (R1) et le mélange réactionnel (R2) comprenant les composants suivants
A) au moins un polyisocyanate,
B) au moins un composé polyfonctionnel réactif envers des isocyanates,
C) au moins un propulseur,
D) au moins un catalyseur,
E) éventuellement des stabilisants de mousse et
F) éventuellement d'autres auxiliaires et/ou additifs, et
la composition du mélange réactionnel (R1) et du mélange réactionnel (R2) se différenciant l'une de l'autre en ce qui concerne au moins l'un des composants B) à F), et
le mélange réactionnel (R1) possédant un temps de prise plus long que le mélange réactionnel (R2).

2. Procédé selon la revendication 1, le mélange réactionnel (R2) étant déposé lorsque le mélange réactionnel (R1) n'est pas durci.

3. Procédé selon l'une quelconque des revendications 1 et 2, les composants A) à F) étant choisis de telle manière qu'une mousse de polyuréthane à alvéoles fermées dotée d'une densité apparente expansée librement selon la norme DIN 53420 dans la plage de 30 à 400 g/l et une résistance à la compression selon la norme DIN ISO 844 EN DE (2014-11) supérieure à 140 kPa, est obtenue.

4. Procédé selon l'une quelconque des revendications 1 à 3, de l'eau étant utilisée en tant que seul propulseur C).

5. Procédé selon l'une quelconque des revendications 1 à 4, la quantité d'eau utilisée par rapport au poids total des composants B) à F) se situant dans la plage de 0,05 à 4 % en poids.

6. Procédé selon l'une quelconque des revendications 1 à 5, la densité apparente expansée librement selon la norme DIN 53420 de la mousse dure de polyuréthane obtenue à partir du mélange réactionnel (R1) ou de la mousse dure de polyuréthane obtenue à partir du mélange réactionnel (R2) dans l'élément composite ou de la mousse dure de polyuréthane obtenue à partir du mélange réactionnel (R1) et du mélange réactionnel (R2) se situant dans la plage de 30 à 400 g/l.

7. Procédé selon l'une quelconque des revendications 1 à 6, le composant B) contenant au moins un polyétherpolyol doté d'une fonctionnalité de 3 à 6 et d'un indice d'hydroxyle dans la plage de 300 à 500.

8. Procédé selon l'une quelconque des revendications 1 à 7, le dépôt du mélange réactionnel (R1) non durci étant réalisé dans un dispositif qui est conçu de telle manière que l'écoulement des composés de départ depuis le domaine de la première couche supérieure soit empêché.

9. Procédé selon la revendication 8, le dispositif étant une presse.

10. Procédé selon l'une quelconque des revendications 1 à 9, l'étape (v) étant mise en œuvre à une température dans la plage de 35 à 80 °C.

11. Procédé selon l'une quelconque des revendications 1 à 10, l'étape (v) étant mise en œuvre dans une presse.

12. Procédé selon l'une quelconque des revendications 1 à 11, l'élément composite étant un composant de réfrigérateur ou un élément sandwich.

13. Élément composite pouvant être obtenu ou obtenu selon un procédé selon l'une quelconque des revendications 1 à 12.

14. Utilisation d'un élément composite selon la revendication 13 ou d'un élément composite pouvant être obtenu ou obtenu selon un procédé selon l'une quelconque des revendications 1 à 12 en tant que composants pour des réfrigérateurs ou en tant que matériau de construction.
